## Europäisches Patentamt
## European Patent Office
## Office européen des brevets

(11) Veröffentlichungsnummer: **0 171 015 B1**

# EUROPÄISCHE PATENTSCHRIFT

(45) Veröffentlichungstag der Patentschrift: **13.03.91**

(51) Int. Cl.⁵: **C08G 18/32, B01J 13/02**

(21) Anmeldenummer: **85109528.1**

(22) Anmeldetag: **29.07.85**

Die Akte enthält technische Angaben, die nach
dem Eingang der Anmeldung eingereicht wurden
und die nicht in dieser Patentschrift enthalten sind.

(54) **Verfahren zur Herstellung von stabilisierten Polyaminen, stabilisierte Polyamine retardierter Reaktivität und ihre Verwendung zur Polyurethanherstellung.**

(30) Priorität: **08.08.84 DE 3429149**

(43) Veröffentlichungstag der Anmeldung:
**12.02.86 Patentblatt 86/07**

(45) Bekanntmachung des Hinweises auf die
Patenterteilung:
**13.03.91 Patentblatt 91/11**

(84) Benannte Vertragsstaaten:
**AT BE CH DE FR GB IT LI NL SE**

(56) Entgegenhaltungen:
EP-A- 100 508
EP-A- 0 097 910
BE-A- 651 504

(73) Patentinhaber: **BAYER AG**

**W-5090 Leverkusen 1 Bayerwerk(DE)**

(72) Erfinder: **Grögler, Gerhard, Dr.**
**von-Diergardt-Strasse 46**
**W-5090 Leverkusen 1(DE)**
Erfinder: **Kopp, Richard, Dr.**
**Bilharzstrasse 15**
**W-5000 Köln 80(DE)**
Erfinder: **Hess, Heinrich, Dr.**
**Körnerstrasse 5**
**W-5090 Leverkusen 1(DE)**
Erfinder: **Rasshofer, Werner, Dr.**
**Leopold-Gmelin-Strasse 31**
**W-5000 Köln 80(DE)**

## Beschreibung

Gegenstand der Erfindung ist ein Verfahren zur Herstellung von durch Polyadduktumhüllung stabilisierten, festen Polyaminen mit retardierter Reaktivität, gekennzeichnet durch Umsetzung fester, feinteiliger Polyamine mit wasserunlöslichen, zwei- und/oder mehrfunktionellen (cyclo)aliphatischen, Polyisocyanaten in einer Menge von 0,1 bis 25 Äquivalent-% NCO pro Äquivalent Amin,
in einem flüssigen Medium aus di- und/oder mehrfunktionellen Polyolen (gegebenenfalls in Gegenwart von Weichmachern, unpolaren oder wenig polaren Lösungsmitteln),
zu einer Suspension von Polyaddukt-umhüllten, stabilisierten Polyaminen retardierter Reaktivität in dem flüssigen Medium.

Erfindungsgegenstand sind auch die nach obigem Verfahren erhaltenen Polyaddukt-umhüllten Polyamine

Weiterer Erfindungsgegenstand ist die Verwendung der Polyaddukt-umhüllten Polyamine als gegenüber Isocyanaten reaktive Wasserstoffe aufweisende Reaktionskomponente, in polyurethanbildenden Reaktivsystemen, insbesondere in härtbaren, langzeitlagerstabilen Polyurethan-Reaktivsystemen, wobei die stabilisierten Polyamine bzw. ihre Suspensionen vorzugsweise mit NCO-Prepolymeren zu lagerstabilen, hitzehärtbaren Einkomponenten-Reaktivsystemen vermischt sind.

Die Herstellung von Polyurethanharnstoffelastomeren aus Polyisocyanaten, höhermolekularen Polyhydroxylverbindungen und aromatischen Diaminen ist bekannt. Um angemessene Verarbeitungszeiten für Reaktivsysteme aus den genannten Ausgangskomponenten zu gewährleisten, setzt man die technisch meistverwendeten reaktionsfähigen aromatischen Isocyanate zweckmäßigerweise mit träge reagierenden Diaminen um. Als Diamine haben sich in diesem Zusammenhang in der Praxis vor allem solche aromatischen Diamine bewährt, deren Basizität und damit Reaktivität gegenüber Isocyanaten herabgesetzt ist. Diese Erniedrigung der Reaktivität läßt sich durch Einführung geeigneter, die Nukleophilie erniedrigender, oder sterisch wirksamer, "sperrig wirkender" Substituenten erreichen. Beispiele solcher Substituenten sind z.B. Halogen: z.B. 3,3'-Dichlor-4,4'-diaminodiphenylmethan (MOCA) oder 3,5-Diamino-4-chlor-1-alkylbenzol [DE-OS 2 065 869] , Carbon säureester: 3,5-Diamino-4-chlor-benzoesäurealkylester (DE-OS 2 003 706) oder 4,4'-Diamino-3,3'-carbethoxy-diphenylmethan [FR-PS 2 104 442] , Sulfonsäureamide: 3,5-Diamino-4-alkyl-benzolsulfonsäuredibutylamid [EP-A 0 037 092], S, S-S oder S-R-S: 2,2'-Diaminodiphenyldisulfid (DE-OS 2 435 872), 1,2-Bis-(2-aminophenylmercapto)-ethan (US-PS 3 920 617), Alkylgruppen: 4,4'-Diamino-3,3'-5,5'-tetramethyl-diphenylmethan (DE-OS 2 731 815) oder 3,5-Diethyl-2,4-diamino-toluol (DETDA).

All diese angeführten aromatischen Kettenverlängerer besitzen in Kombination mit NCO-gruppenhaltigen Polyethern oder Polyestern jedoch nur eine begrenzte, relativ kurze Gieß- und Topfzeit. Ihre Verarbeitung muß, insbesondere in der Wärme, sehr rasch erfolgen. Vielfach sind durch die notwendigen Substituenten zur Minderung der Aminreaktivität jedoch die Strukturen der mit den Isocyanaten entstehenden Hartsegmente "gestört" und man muß mit der verminderten Amin-Reaktivität zwangsläufig verschlechterte Eigenschaften der Polyurethane in Kauf nehmen.

In der US-PS 3 891 606 wird die Vernetzung von NCO-Prepolymeren aus Polyhydroxylverbindungen und einem Überschuß an Polyisocyanaten mit aromatischen Diaminen beschrieben, deren Reaktivität gegenüber Isocyanatgruppen durch Komplexbildung mit gewissen Alkalimetallsalzen herabgesetzt ist. Der Nachteil dieses Verfahrens liegt darin, daß es auf zwei spezielle aromatische Diamine beschränkt ist. Darüber hinaus muß der Komplex zwischen dem aromatischen Diamin und dem Alkalimetallsalz in einem gesonderten Verfahrensschritt hergestellt werden.

Zur Herstellung von Polyurethanharnstoffen durch Umsetzung von höhermolekularen Polyisocyanaten mit aromatischen Diaminen in heterogener Phase ist bisher nur wenig bekannt geworden.

Gegenstand der DAS 1 122 699 ist ein Verfahren zur Herstellung von Polyurethanelastomeren durch Vernetzung von flüssigen Isocyanat-Prepolymeren durch Umsetzung mit Gemischen aus primären Diaminen und mehrere Hydroxylgruppen aufweisenden Verbindungen unter Formgebung, in welchem eine Dispersion eines pulverförmigen kristallinen Diamins in einem flüssigen, mehrere Hydroxylgruppen aufweisenden Polyester, Polyether oder in Rizinusöl in das Prepolymere bei einer unter dem Schmelzpunkt des Diamins liegenden Temperatur eingebracht und die Masse bei Temperaturen oberhalb des Schmelzpunktes des Diamins in der Mischung in an sich bekannter Weise ausgehärtet wird.

Weiterhin wird in der US 3 105 062 ein Verfahren zur Herstellung von Polyurethanharnstoffen beschrieben. Hierbei wird einem höhermolekularen, NCO-Gruppen enthaltenden Polyether oder Polyester ein aromatisches Diamin in Form eines feingemahlenen Pulvers zugesetzt. Dieses zunächst als 2-Phasensystem vorliegende Reaktionsgemisch geht dann erst im Verlauf der Verfestigung bei erhöhter Temperatur in eine Reaktionsschmelze über, wobei aber - mangels Durchmischung - oftmals heterogene Produkte inhomogener Zusammensetzung erhalten werden.

2

Die Lagerstabilität der heterogenen Reaktionsgemische der DAS 1 122 699 sowie der US 3 105 062 bei Raumtemperatur ist sehr begrenzt und beträgt nur bis zu mehrere Stunden. Je nach Wahl des aromatischen Diamins und insbesondere des höhermolekularen Polyisocyanates (NCO-Prepolymer auf Basis Polyether oder Polyester) tritt eine ständig zunehmende Viskositätserhöhung unter Pastenbildung bzw. bis zur nicht mehr verarbeitbaren, festen Phase ein.

Eine Verkapselung von Aminen ist an sich bekannt, z.B. aus US-PS 3 396 116 und 3 396 117, wo die Kapselwand aus wasserlöslichen Alginaten, gegebenenfalls kombiniert mit weiteren Polymeren wie Polyvinylalkohol, Polyethylenoxiden, Polyacrylaten oder Gelatine, die evtl. nachgehärtet werden, besteht.

Nach der US-PS 3 384 680 werden flüssige Polyamine an feinteilige, absorbierende Materialien gebunden, anschließend versiegelt und für Epoxidformulierungen verwendet.

Nach der US-PS 3 791 980 werden elektrisch leitende Amine, z.B. Diethylamin, unter hoher Spannung durch Düsen unter Bildung geladener, runder Tröpfchen gesprüht und mit flüssigem, schmelzbarem Material umhüllt.

In der DE-OS 3 224 456 wird eine Mikroverkapselung von wasserunlöslichen, flüssigen Polyaminen, gegebenenfalls in Gegenwart wasserlöslicher Schutzkolloide, mit wasserlöslichen Bisulfitaddukten von Polyisocyanaten in wäßriger Lösung beschrieben, sowie die Verwendung derartig mikroverkapselter, flüssiger Polyamine bei der Herstellung von Polyurethanharzformulierungen.

In der DE-OS 3 224 454 wird die Mikroverkapselung wasserunlöslicher Substanzen (z.B. farbgebender Komponenten für Reaktionsdurchschreibpapiere) durch Verkapselung mittels Polyharnstoffen aus flüssigen Polyaminen und wasserlöslichen Polyisocyanatderivaten in wäßriger Lösung, gegebenenfalls in Gegenwart von Schutzkolloiden, beschrieben (vgl. auch US-PS 3 575 882, 3 575 515, 3 607 776, 4 076 774 und DE-OS 2 655 048).

Schließlich wird im SU-Patent Nr. 53 52 89 ein Verfahren zur Herstellung von verkapselten aromatischen Diaminen beschrieben, das darin besteht, daß das entsprechende aromatische Diamin einer Wechselwirkung mit unterschüssigen Mengen an Diisocyanat in Gegenwart einer Hexan-Ethylacetat-Mischung = 6:1 unterworfen wird. Die Reaktion wird bei Raumtemperatur durchgeführt.

Diese "verkapselten Diamine" wurden als Härter für Epoxidharze beansprucht. Aus dieser Patentliteratur ist jedoch nicht ersichtlich, inwieweit die Reaktivität dieser - in einem speziellen Lösungsmittelgemisch - modifizierten Polyamine, die daraus auch erst isoliert werden müssen, gegenüber Isocyanat-Gruppen erniedrigt wird.

Demgegenüber werden erfindungsgemäß durch oberflächliche Reaktion der festen Polyamine mit zwei und/oder mehrfunktionellen, nieder- und/oder höhermolekularen Verbindungen mit aliphatisch gebundenen Isocyanatgruppen Polyaminteilchen erhalten, die erst oberhalb einer noch näher zu definierenden "Aufdickungstemperatur", z.B. durch Aufschmelzen der Polyadduktumhüllung, durch Zerstörung der Umhüllung durch Scherkräfte, Diffusion der Polyamine durch die Polyadduktschicht oder Auflösung der Polyadduktschicht durch Einwirkung polarer Lösungsmittel, mit weiteren Polyisocyanaten in Reaktion treten können.

Die erfindungsgemäß stabilisierten Polyamine enthalten noch mindestens 75 %, maximal jedoch 99,9 %, der ursprünglich vorhandenen (primären und/oder sekundären) Aminogruppen der unmodifizierten Polyamine.

Die erfindungsgemäß stabilisierten Polyamine besitzen in Abmischung mit NCO-Prepolymeren im Vergleich zu Mischungen mit unmodifizierten festen Polyaminen eine beträchtlich verminderte Reaktionsgeschwindigkeit bzw. eine deutlich erhöhte Lagerstabilität. Die Aushärtung solcher Langzeit-lagerstabilen Reaktivmischungen kann durch einfaches Erhitzen erfolgen, wobei oberhalb einer bestimmten Temperatur ("Aufdickungstemperatur") eine schnelle Polyadditionsreaktion erfolgt. Durch eine einfache Variation der Reaktionsbedingungen, z.B. Temperatur bei der Umhüllungsreaktion, Auswahl des Reaktionsmediums oder Art und Menge der zur Stabilisierung herangezogenen Isocyanate läßt sich diese "Aufdickungstemperatur" variieren und eine hohe Lagerstabilität auch bei höheren Lagertemperaturen einstellen. Die optimalen Reaktionsbedingungen für die Bildung der festen Polyaddukthülle auf den Polyaminen lassen sich für die jeweiligen PU-Reaktivmischungen (Einkomponenten-PU-Mischungen) durch einfache Serienversuche ermitteln.

Die mit den stabilisierten Polyaminen gebildeten langzeitlagerbeständigen, gut fließfähigen heterogenen PUR-Reaktivsysteme lassen sich bei relativ niedrigen Temperaturen (oberhalb der Aufdickungstemperatur, bevorzugt $\geq 55°$ C, besonders bevorzugt bei 100 bis 140$°$ C) aushärten, wobei hochwertige Polyurethan-(harnstoff)-Elastomere, -Beschichtungen, -Laminate, -Verklebungen oder auch zellige Elastomere hergestellt werden können.

Gegenstand der Erfindung ist somit ein Verfahren zur Herstellung von in einem Polyol dispergierten, mit einer Polyharnstoffhülle umgebenen festen Polyaminen, welches dadurch gekennzeichnet ist, daß man

(A) Polyamine mit mindestens 2 primären und/oder sekundären Aminogruppen, einem Schmelzpunkt > 50°C und einer Teilchengröße von 0,5 - 200 $\mu$m mit

(B) 0,1 - 25 Äquivalent %, bezogen auf primäre und sekundäre Aminogruppen in (A), an wasserunlöslichen, (cyclo) aliphatischen Polyisocyanaten in

(C) einer flüssigen Polyhydroxylverbindung mit einem MG von 400 - 10 000, sowie gegebenenfalls

(D) Weichmachern, unpolaren oder wenig polaren Lösungsmitteln, unterhalb der Schmelztemperatur von (A) umsetzt.

Erfindungsgemäß werden somit durch teilweise Oberflächenreaktion mit wasserunlöslichen, di- und/oder höherfunktionellen Polyisocyanaten, vorzugsweise mehr als 2,1-funktionellen Polyisocyanaten, Polyaddukt-umhüllte, stabilisierte, feste feinteilige Polyamine retardierter Reaktivität mit einem Aminogruppen-Restgehalt von mindestens 75 %, und weniger als 99,9 %, bevorzugt weniger als 99,8 % und insbesondere weniger als 99,5 % der ursprünglich vorhandenen Aminogruppen, suspendiert in Polyhydroxylverbindungen mit Molekulargewichten von 400 bis 10 000, vorzugsweise 500 bis 6000, hergestellt, wobei die Suspension gegebenenfalls weitere Polyhydroxylverbindungen und/oder auch nichtstabilisierte nieder- und/oder höhermolekulare Polyaminoverbindungen enthalten kann.

Die Suspensionen werden nach dem oben geschilderten Verfahren hergestellt. Die Zumischung eventueller weiterer nieder- und/oder höhermolekularer Polyole erfolgt dabei nach Ausführung der Stabilisierungsreaktion der festen Polyamine mit den unterschüssigen Mengen an Polyisocyanaten.

Die erfindungsgemäß umhüllten Polyamine ergeben in Kombination mit weiteren Polyisocyanaten Reaktivsysteme, bei denen die Reaktionszeit (Topfzeit) verlängert ist (z.B. Gießsysteme), sie gestatten jedoch auch, bei niedrigen Temperaturen langzeitlagerstabile (Einkomponenten-)PU-Reaktivsysteme aufzubauen, welche durch Temperaturerhöhung zur Reaktion gebracht werden. Unter Einkomponenten-PU-Reaktivsystemen werden dabei solche Mischungen verstanden, welche bereits die Reaktivkomponenten in solchen Mengen enthalten, daß daraus durch Hitzehärtung direkt die gewünschten polymeren Polyurethan-(harnstoff)e entstehen.

Verwendet man erfindungsgemäß stabilisierte Polyamine nur anteilsweise neben nicht stabilisierten Polyaminen, so läßt sich auch ein stufenweiser Aufbau von Polyurethan(harnstoff)en realisieren, wobei zunächst die nicht stabilisierten Polyamine unter deutlichem Viskositäts- und Polymeraufbau reagieren und erst dann - gegebenenfalls in einer anderen Verfahrens- oder Applikations- oder Verwendungsstufe, die stabilisierten Polyamine, z.B. bei erhöhter Temperatur, die Reaktion zum nunmehr hochpolymeren Polyurethan(harnstoff) eingehen. Als nichtstabilisierte Polyamine dienen hierbei vorzugsweise höhermolekulare Polyamine; es können aber auch Anteile an niedermolekularen, vorzugsweise aromatischen Di- oder Polyaminen, mitverwendet werden.

Erfindungsgemäß können Polyurethan(harnstoff)e aus

(I) gegenüber Isocyanat reaktive H-Gruppen tragenden, nieder- und/oder höhermolekularen Verbindungen,

(II) nieder- und/oder höhermolekularen Polyisocyanaten und/oder NCO-Prepolymeren, wobei die Isocyanate ganz oder teilweise in blockierter Form vorliegen können,

(III) gegebenenfalls Polyurethankatalysatoren und

(IV) gegebenenfalls üblichen Hilfs- und/oder Zusatzstoffen und/oder monofunktionellen Kettenabbrechern, hergestellt werden, wobei die NCO-Gruppen von (II) und die reaktiven H-Gruppen aus (I) in Äquivalenzverhältnissen von (I):(II) von 1,5:1 bis 0,8:1, vorzugsweise 1,25:1 bis 0,9:1, eingesetzt werden, und wobei man

als (I) erfindungsgemäß hergestellte Polyaddukt-umhüllte, feste Polyamine retardierter Reaktivität, suspendiert in Polyhydroxylverbindungen, einsetzt,

und die fließfähigen oder leicht aufschmelzbaren PU-Reaktivsysteme durch Einwirkung von Hitze, Scherkräften und/oder polaren Lösungsmitteln in massive oder geschäumte PU-Kunststoffe, Beschichtungen oder Überzüge überführt.

Eine bevorzugte Ausführungsform liegt darin, die durch Polyadduktumhüllung stabilisierten Polyamine in höhermolekularen NCO-Prepolymeren zu suspendieren, wobei die Menge an reaktiven Wasserstoffatomen und die der NCO-Gruppen derart, beispielsweise in Äquivalentverhältnissen von 1,25:1 bis 0,8:1, gewählt wird, daß sich hochmolekulare Polyurethan(harnstoff)e bilden, wenn diese (lagerstabilen) Einkomponentenmischungen durch Erwärmen zur vollständigen Umsetzung gebracht werden.

I.) Ausgangsmaterialien für das erfindungsgemäße Verfahren,

Als Ausgangskomponente (A) zur Herstellung der erfindungsgemäß stabilisierten, festen Polyamine sind alle Di- oder mehr als difunktionellen Polyamine oder deren beliebige Gemische geeignet, welche mindestens zwei primäre und/oder sekundäre Aminogruppen aufweisen, sofern sie einen Schmelzpunkt oberhalb von 50°C, vorzugsweise ≥ 80°C aufweisen. Es können dies aliphatische, cycloaliphatische, araliphatische, bevorzugt aber aromatische und heterocyclische Polyamine sein. Beispiele für derartige Verbindungen, vorzugsweise Diamine, werden in der folgenden Auflistung, zusammen mit ihren Schmelzpunkten, aufgeführt:

| Polyamine | Schmelzpunkt (°C) |
|---|---|
| Ethylenglykol-bis(p-aminobenzoesäure-ester) | 210 |
| 2,2'-Diaminoazobenzol | 134 |
| 3,3'-Diaminoazobenzol | 156 |
| 4,4'-Diaminoazobenzol | 241-243 |
| 2,3-Diaminobenzoesäure | 190-191 |
| 2,4-Diaminobenzoesäure | 140 |
| 2,5-Diaminobenzoesäure | 200 |
| 3,4-Diaminobenzoesäure | 210 |
| 3,5-Diaminobenzoesäure | 240 |

| Polyamine | Schmelzpunkt (°C) |
|---|---|
| 2,2'-Diaminobenzophenon | 134-135 |
| 4,4'-Diaminobenzophenon (bevorzugt) | 239-241 |
| 4,4'-Diaminodiphenylamin | 158 |
| 3,4-Diaminophenol | 167-168 |
| 4,4'-Diaminostilben | 227-228 |
| 2,2'-Diaminostilben | 176 |
| 4,4'-Diaminotriphenylmethan | 139 |
| Naphthylendiamin-1,5 (bevorzugt) | 189,5 |
| Naphthylendiamin-2,6 (bevorzugt) | 217-218 |
| Naphthylendiamin-2,7 (bevorzugt) | 160 |
| p-Phenylendiamin (bevorzugt) | 139-141 |
| 1,2-Diaminoanthrachinon | 289-291 |
| 1,5-Diaminoanthrachinon | 312-313 |
| 1,4-Diaminoanthrachinon | 265-268 |
| 2,6-Diaminoanthrachinon | 325 |
| 3,6-Diaminoacridin | 267-270 |
| 4,5-Diaminoacenaphthen | 140-145 |
| 4,4'-Diaminodiphenylether (bevorzugt) | 188-190 |
| 3,3'-Diaminodiphenylsulfon | 150-153 |
| 3,3'-Dimethoxybenzidin | 136-137 |
| 4,4'-Diaminodiphenylsulfon | 174-176 |
| 2,3-Diaminofluoren | 192-195 |
| 2,5-Diaminofluoren | 174-176 |
| 2,7-Diaminofluoren | 165,5-167 |
| 9,10-Diaminophenanthren | 164-166 |
| 3,6-Diaminodurol | 151-154 |
| p-Xylylen-bis-(o-aminothiophenyl)-ether | 136-138 |
| p,p'-Diaminobenzanilid (bevorzugt) | 206-208 |
| 4,3'-Diaminobenzanilid (bevorzugt) | 170-172 |
| 3,4'-Diaminobenzanilid (bevorzugt) | 153-156 |

| Polyamine | Schmelzpunkt (°C) |
|---|---|
| 4,3'-Diamino-4'-chlorobenzanilid | 205-209 |
| 4,2'-Diamino-4'-chlorobenzanilid | 175-177 |
| 4-Chlor-3,5-diaminobenzoesäureethylester (bevorzugt) | 137 |
| 4-Chlor-3-aminobenzoesäure-(4-chlor-3-amino-phenylester) | 147-148 |
| 4-Chlor-3-aminobenzoesäure-(3-chlor-4-amino-phenylester) | 145-146 |
| 4-Aminobenzoesäure-(3-chlor-4-amino-phenylester) | 138-140 |
| Bernsteinsäure-di-(3-chlor-4-amino)-phenylester | 196-198 |
| Ethylenglykol-bis-(4-chlor-3-amino)-benzoesäureester | 171 |
| 3,3'-Dichlor-4,4'-diaminodiphenylcarbonat | 166-168 |
| 4,4'-Dichlor-3,3'-diaminodiphenylcarbonat | 192-193 |
| 4-Methyl-3,5-diaminobenzoesäureethylester (bevorzugt) | 142-144 |
| 3,5-Diaminobenzoesäuremethylester | 133-135 |
| 4,4'-Diamino-diphenylmethan-3,3'-dicarbon-säure-dimethylester (bevorzugt) | 146 |
| 1,4-Bis-(sulfanilyl)-piperazin | 331-332 |
| 4,4'-Diamino-diphenylmethan-3,3'-dicarbon-säure | 245 |
| N,N'-Di(p-aminobenzolsulfonyl)-diaminoethan | 200-205 |
| p,p'-Diaminobenzolsulfonanilid (bevorzugt) | 137-138 |
| N,N'-Di(2-anilino)-harnstoff (bevorzugt) | 305 |
| N,N'-Di(ß-anilinoethyl)-harnstoff | 130-135 |
| 2,5-Dimethyl-m-xylylendiamin | 123 |
| 3,3'-Dimethyl-4,4'-diamino-diphenyl | 130 |
| 4,4'-Diamino-diphenylethan | 138 |
| 1,4-Diamino-cyclohexan (trans-Isomeres) | 74-75 |
| 4,4'-Diamino-dicyclohexylmethan (trans/trans-Isomeres) | 65-70 |

Die zur Stabilisierungsreaktion geeigneten, festen, feinteiligen Polyamine dürfen sich nur zu einem geringen Teil, z.B. < 3 %, vorzugsweise < 1 %, in den als Suspendiermittel (C) bzw. (D) benutzten Polyhydroxylverbindungen, Weichmachern und gegebenenfalls Lösungsmitteln lösen.

Zur Stabilisierung der festen, feinteiligen Polyamine (A) werden in unterschüssigen Mengen (mindestens 0,1, bevorzugt mindestens 0,2 und insbesondere mindestens 0,5; maximal bis 25, vorzugsweise bis 15, bevorzugt bis 10 Äquivalent-%, bezogen auf die Aminogruppen der Polyamine) wasserunlösliche, (cyclo) aliphatische Di- und/oder Polyisocyanate, insbesondere mit einer mittleren NCO-Funktionalität von > 2,1, vorzugsweise > 2,5, eingesetzt. Bevorzugt sind biuretisierte, dimerisierte, trimerisierte, allophanatisierte oder carbodiimidisierte oder mit Polyolen modifizierte Polyisocyanate Auch Gemische solchen Polyisocyanate sind einsetzbar. Die Polyisocyanate bzw. ihre Modifizierungsprodukte weisen in der Regel mittlere Molekulargewichte bis 850, vorzugsweise bis 750 auf, insbesondere bis 550, und vorzugsweise mittlere Molekulargewichte von mindestens 168, auf.

Beispiele sind Hexamethylendiisocyanat, Undecamethylendiisocyanat, Dodecamethylendiisocyanat, Lysinmethylesterdiisocyanat, Menthandiisocyanat, Isophorondiisocyanat, Cyclohexandiisocyanate, $\alpha,\alpha,\alpha',\alpha'$-Tetramethyl-m/p-hexahydroxylylen-diisocyanate, 4-Isocyanatomethyl-octan-1,8-diisocyanat, Dicyclohexylmethan-diisocyanate, 1,6,11-Triisocyanatoundecan, substituierte 1,5-Diisocyanatopentanderivate entsprechend EP-A 77 105 (z.B. 1-Methyl-1,5-pentan-diisocyanat) oder ihre oligomeren Derivate (z.B. entsprechend EP-A 77 104). Besonders bevorzugt sind biuretisierte, dimerisierte, carbodiimidisierte, allophanatisierte, trimerisierte oder polyolmodifizierte Polyisocyanate auf der Basis von Hexamethylendiisocyanat, Isophorondiisocyanat oder Dicyclohexylmethandiisocyanat.

Geeignete Weichmacher (D) sind z.B. Adipinsäuredialkylester oder Trialkylphosphate, insbesondere weniger polare, langkettige Trialkylester wie Stearylester. Dabei können auch Anteile an leichtflüchtigen, wenig polaren Lösungsmitteln (z.B. aliphatische Kohlenwasserstoffe) mitverwendet und nach der Umhüllungsreaktion gegebenenfalls wieder entfernt werden.

Vorzugsweise erfolgt die Stabilisierungsreaktion jedoch in den höhermolekularen Polyolen (C) allein, wobei die erhaltene Suspension oder Paste dann ohne Abtrennung des Suspensionsmediums weiter verwendet wird. Bevorzugt sind Suspensionen mit einem Gew.-Verhältnis von stabilisiertem, festem Polyamin zu Suspendiermedium (C) von 20:80 bis 80:20, insbesondere 40:60 bis 60:40.

Es können zur Suspendierung diejenigen Polyole eingesetzt werden, die auch zur Herstellung der NCO-funktionellen Prepolymere benutzt werden und weiter unten ausführlich als Polyolkomponenten zur Herstellung von NCO-Prepolymeren beschrieben sind.

Da die höhermolekularen Polyole (C) als Suspendiermedium für die festen, feinteilig suspendierten Polyamine (A) dienen und mit den Polyaminen in der Reaktion mit den Polyisocyanaten (B) konkurrieren können, sollen sie bevorzugt bei Raumtemperatur flüssig (oder bei Temperaturen von $\leq 60^\circ$ aufschmelzend) und niederviskos sein, auf die suspendierten Polyamine möglichst wenig lösend wirken und sich in ihrer Reaktivität gegenüber (B) möglichst stark vom Polyamin (A) unterscheiden. Aus diesen Gründen sind Polyole mit sekundären OH-Gruppen, z.B. Polyoxypropylenpolyole generell bevorzugt. Je weniger reaktiv die Amine sind, umso mehr werden die überwiegend sekundäre OH-Gruppen tragenden Polyole bevorzugt, da sekundäre OH-Gruppen langsamer mit Isocyanaten reagieren.

Bei aliphatischen, cycloaliphatischen oder araliphatischen Polyaminen ist die Reaktivität der Aminogruppe so sehr viel größer als die von OH-Gruppen, daß es praktisch keinerlei Rolle spielt, ob die Polyole primäre oder sekundäre OH-Gruppen tragen.

Bei aromatischen Polyaminen ist die Reaktivitätsdifferenz $NH_2$/OH geringer, daher werden dort Polyole bevorzugt, welche zumindest anteilsweise sekundäre OH-Gruppen tragen. Sind die aromatischen Polyamine durch entsprechende Substitution noch weniger reaktiv als unsubstituierte Diamine, so werden überwiegend sekundäre Hydroxylgruppen aufweisende Polyole bevorzugt.

Es ist jedoch in praktisch allen Fällen möglich, sowohl Polyole mit primären wie auch sekundären OH-Gruppen als Suspendiermedium einzusetzen. Bei geringeren Reaktivitätsdifferenzen nehmen dann allerdings zunehmend Hydroxylgruppen an der Reaktion mit den Polyisocyanaten teil und neben der Stabilisierungsreaktion unter Umhüllung der festen Diamine werden gegebenenfalls Polyole unter Viskositätserhöhung miteinander verknüpft oder auch gelegentlich an die Diamin-Teilchen über die Polyisocyanate angeheftet. Diese Reaktionen könnten auch die nach der Stabilisierungsreaktion in Polyolen überraschend beobachtete, verbesserte Sedimentationsstabilität solcher Suspensionen erklären.

Bevorzugte, höhermolekulare Polyole (C) sind Polyether- und Polyesterpolyole, insbesondere Polyetherpolyole wie Polyoxypropylenpolole oder Polyoxyethylen/oxypropylen-polyole mit vorzugsweise sekundären OH-Gruppen.

Gegebenenfalls können der stabilisierten Diaminsuspension auch niedermolekulare Polyole (Molekulargewichte 62 - 399) zugefügt werden. Diese niedermolekularen Polyole wirken dann als Kettenverlängerungsmittel bei der Umsetzung zu hochpolymeren Polyurethankunststoffen. Im allgemeinen sollten jedoch weniger aus 80 % der Aminäquivalente, bevorzugt weniger als 50 %, durch OH-Gruppen aus niedermolekularen Polyolen ersetzt werden.

Im erfindungsgemäßen Verfahren kann zunächst das Polyamin (A) in (C) suspendiert werden und dann das Polyisocyanat (B) untergemischt werden, oder das Polyisocyanat (B) wird zunächst in (C) fein verteilt oder gelöst und dann das feste Polyamin (A) suspendiert.

Die Temperatur liegt im erfindungsgemäßen Verfahren unter dem jeweiligen Schmelzpunkten des Polyamins. Sie liegt im allgemeinen unter 70°C , bevorzugt bei 0 bis 50°C.

II) Verwendung der stabilisierten Polyamin-Suspensionen in Polyurethan-Reaktivsystemen

Die erfindungsgemäßen Polyamin-Suspensionen werden, wie bereits oben erwähnt, bei der Herstellung von Polyurethanen als gegenüber Isocyanaten reaktive H-Atome tragende Komponente (I) eingesetzt.

Als Isocyanatkomponenten (II), kommen aliphatische, cycloaliphatische, araliphatische, aromatische und/oder heterocyclische Polyisocyanate in Betracht, wie sie aus einer Vielzahl von Veröffentlichungen für die Verwendung zum Aufbau von Polyurethan bekannt sind und beispielsweise von W. Siefken in Justus Liebigs Annalen der Chemie 562, Seiten 75 bis 136, 1949, und beispielsweise in den DE-OS 2 854 384 und 2 920 501 beschrieben wurden. Beispiele sind: Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan, 2,4- und 2,6-Hexahydrotoluylendiisocynaat sowie beliebige Gemische dieser Isomeren, Hexahydro-1,3- und/ oder -1,4-phenylen-diisocyanat, Perhydro-2,4'- und/oder -4,4'-diphenylmethan-diisocyanat, 1,3- und 1,4-Phenylen-diisocyanat, 2,4- und 2,6-Toluylendiisocyanat sowie beliebige Gemische dieser Isomeren, Diphenylmethan-2,4'-und/oder 4,4'-diisocyanat, Naphthylen-1,5-diisocyanat, Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in den britischen Patentschriften 874 430 und 848 671 beschrieben werden, perchlorierte Arylpolyisocyanate, wie sie z.B. in der DE-AS 1 157 601 beschrieben werden, Carbodiimidgruppen aufweisende Polyisocyanate, wie sie in der DE-PS 1 092 007 beschrieben werden, Diisocyanate, wie sie in der US-PS 3 492 330 beschrieben werden, Allophanatgruppen aufweisende Polyisocyanate, wie sie z.B. in der GB-PS 994 890, der BE-PS 761 626 und der veröffentlichten holländischen Patentanmeldung 7 102 524 beschrieben werden, Isocyanuratgruppen aufweisende Polyisocyanate, wie sie z.B. in den DE-PSen 1 022 789, 1 222 067 und 1 027 394 sowie in den DE-OSen 1 929 034 und 2 004 048 beschrieben werden, Urethangruppen aufweisende Polyisocyanate, wie sie z.B. in der BE-PS 752 261 oder in der US-PS 3 394 164 beschrieben werden, acylierte Harnstoffgruppen aufweisende Polyisocyanate gemäß der DE-PS 1 230 778, Biuretgruppen aufweisende Polyisocyanate, wie sie z.B. in der DE-PS 1 101 394, in der GB-PS 889 050 und in der FR-PS 7 017 514 beschrieben werden, durch Telomerisationsreaktionen hergestellte Polyisocyanate, wie sie z.B. in der BE-PS 723 640 beschrieben werden, Estergruppen aufweisende Polyisocyanate, wie sie z.B. in den GB-PSen 965 474 und 1 072 956, in der US-PS 3 567 763 und in der DE-PS 1 231 688 genannt werden, sowie Umsetzungsprodukte der obengenannten Isocyanate mit Acetalen gemäß der DE-PS 1 072 385. Ferner ist es möglich, beliebige Mischungen dieser Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI"), 4,4'- und/oder 2,4'-Diphenylmethan-4,4'-diisocyanat und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate").

Die Polyisocyanate bzw. die aus den genannten Polyisocyanaten und den unten erwähnten höher- und/oder niedermolekularen Polyolen hergestellten Isocyanat-Prepolymeren sollen bei der Reaktion mit dem feinteiligen, suspendierten aromatischen Diamin in flüssiger Form vorliegen.

Die Herstellung der NCO-Prepolymeren ist im Prinzip bekannt und wird z.B. in den DE-OS 2 854 384 und 2 920 501 beschrieben. Die Polyisocyanate oder die NCO-Prepolymeren können auch in Form ihrer teilweise oder vollständig an den NCO-Gruppen mit üblichen Blockierungsmitteln (wie Ketoximen, Lactamen, Malonestern, Phenolen) "blockierten" Form eingesetzt werden.

Je nach Anwendungszweck sind die NCO-Prepolymeren im wesentlichen linear (z.B. bei Anwendung bei Elastomeren) oder verzweigt (z.B. für Beschichtungen, Überzüge, Lacke oder Schaumstoffe) aufgebaut. Der Gehalt an freien (oder blockierten) NCO-Gruppen liegt im allgemeinen zwischen 0,5 und 20 % NCO, kann jedoch noch höher liegen, z.B. bis 25 % NCO. Der NCO-Gehalt bestimmt z.B. die Härte der PU-Kunststoffe. Für Elastomere liegt er im allgemeinen zwischen 1 und 12 %, vorzugsweise 1,5 bis 7,5 %.

Als Ausgangskomponenten zur Herstellung von Isocyanat-Prepolymeren di- oder mehrfunktionelle Polyhydroxylverbindungen mit einem Molekulargewicht von etwa 400 bis 10 000, vorzugsweise 500 bis 6000 und Schmelzpunkten $\leq$ 60°C,geeignet.Es handelt sich dabei um mindestens zwei, vorzugsweise 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind. Beispiele hierfür sind z.B. ausführlich in der DE-OS 2 920 501 und der DE-OS 2 854 384 aufgeführt.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren, Polycarbonsäureanhydriden oder Polycarbonsäureestern von niedrigen Alkoholen. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Ölsäure, dimere und trimere Fettsäuren, gegebenenfalls in Mischung mit monomeren Fettsäuren, Terephthalsäuredimethylester und Terephthalsäure-bis-glykolester. Als mehrwertige Alkohole kommen z.B. Ethylenglykol, Propandiol-(1,2) und -(1,3), Butandiol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, 1,4,3,6-Dianhydrohexite, Methylglykosid, ferner Di-, Tri-, Tetra- und Polyethylenglykol, Di-, Tri-, Tetra- und Polypropylenglykol, Di-, Tri-, Tetra- und Polybutylenglykol in Frage. Die Polyester können anteilig endständige Carboxylgruppen aufweisen. Auch Polyester aus Lactonen, z.B. $\epsilon$-Caprolacton oder Hydroxycarbonsäuren, z.B. $\omega$-Hydroxycapronsäure, sind einsetzbar.

Auch die in Frage kommenden, mindestens zwei, in der Regel zwei bis acht, vorzugsweise zwei bis drei, Hydroxylgruppen aufweisenden Polyether sind solche der an sich bekannten Art und werden z.B. durch Polymerisation von Tetrahydrofuran und/oder Epoxiden wie Ethylenoxid, Propylenoxid, Butylenoxid, Styroloxid oder Epichlorhydrin mit sich selbst, z.B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Wasser, Alkohole, Aminoalkohole, Amine, Zucker u.a. bekannte Startkomponenten, z.B. Ethylenglykol, Propandiol-(1,3) oder -(1,2), Trimethylolpropan, 4,4'-Dihydroxydiphenylpropan, Anilin, Ammoniak, Ethanolamin oder Ethylendiamin hergestellt. Auch Sucrosepolyether, wie sie z.B. in den DE-AS 1 176 358 und 1 064 938 beschrieben werden, kommen in Frage. Beispiele sind höhermolekulare Polyoxyalkylenpolyole, z.B. Polyoxytetramethylenglykole oder Ethoxylierungs- und/oder Propoxylierungsprodukte von niedermolekularen Di- und Polyolen oder Mono-, Di- und Polyaminen, z.B. propoxyliertes Trimethylolpropan, propoxyliertes Ethylendiamin oder lineare oder verzweigte Polypropylenglykolether, die anteilsweise in statistischer, blockartiger oder endständiger Form Ethylenoxid enthalten können und insgesamt Molekulargewichte von 400 bis 10 000, vorzugsweise 600 bis 6000, aufweisen. Auch durch Vinylpolymerisate modifizierte Polyether, wie sie z.B. durch Polymerisation von Styrol und Acrylnitril in Gegenwart von Polyethern entstehen (US-PSen 3 383 351, 3 304 273, 3 523 093, 3 110 695, DE-PS 1 152 536), sind geeignet, ebenso OH-Gruppen aufweisende Polybutadiene. Polyether mit sekundären OH-Gruppen sind als Suspendiermedium (C) bevorzugt.

Unter den Polythioethern seien insbesondere die Kondensationsprodukte von Thiodiglykol mit sich selbst und/ oder mit anderen Glykolen, Dicarbonsäuren, Formaldehyd, Aminocarbonsäuren oder Aminoalkoholen angeführt.

Als Polyacetale kommen z.B. die aus Glykolen, wie Diethylenglykol, Triethylenglykol, 4,4'-Dioxethoxydiphenyldimethylmethan, Hexandiol und Formaldehyd herstellbaren Verbindungen in Frage. Auch durch Polymerisation cyclischer Acetale lassen sich Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Di-, Tri- oder Tetraethylenglykol mit Diarylcarbonaten, z.B. Diphenylcarbonat, oder mit Phosgen hergestellt werden können.

Zu den Polyesteramiden und Polyamiden zählen z.B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate.

Auch bereits Urethan- oder Harnstoffgruppen enthaltende Polyhydroxylverbindungen sowie gegebenenfalls modifizierte, natürliche Polyole, wie Rizinusöl, Kohlenhydrate oder Stärke, sind verwendbar. Auch Anlagerungsprodukte von Alkylenoxiden an Phenol-Formaldehyd-Harze bzw. an Harnstoff-Formaldehydharze können im erfindungsgemäßen Verfahren eingesetzt werden.

Auch Hydroxylendgruppen aufweisende Polybutadiene sind geeignet, da sie besonders elastische und hydrolysenstabile Produkte ergeben. Es können gegebenenfalls auch Polyhydroxylverbindungen eingesetzt werden, in welchen hochmolekulare Polyaddukte bzw. Polykondensate oder Polymerisate in feindisperser oder auch gelöster Form enthalten sind.

Polyaddukthaltige Polyhydroxylverbindungen werden erhalten, wenn man Polyadditionsreaktionen (z.B.

EP 0 171 015 B1

Umsetzungen zwischen Polyisocyanaten und aminofunktionellen Verbindungen) bzw. Polykondensationsreaktionen (z.B. zwischen Formaldehyd und Phenolen und/oder Aminen) in situ in o.g., Hydroxylgruppen aufweisenden, Verbindungen, ablaufen läßt.

Auch durch Vinylpolymerisate modifizierte Polyhydroxylverbindungen, wie sie z.B. durch Polymerisation von Styrol und Acrylnitril in Gegenwart von Polyethern oder Polycarbonatpolyolen erhalten werden, sind für das erfindungsgemäße Verfahren geeignet.

Vertreter dieser erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32 - 42 und Seiten 44 und 54 und Band II, 1964, Seiten 5 - 6 und 198 - 199, sowie im Kunststoff-Handbuch, Band VII, Vieweg-Höchtlen, Carl-Hanser-Verlag, München, 1966, z.B. auf den Seiten 45 bis 71, und in der DE-OS 2 854 384 und 2 920 501 beschrieben.

Geeignete Polyole sind auch hydroxylgruppenhaltige Polymerisate, beispielsweise Copolymerisate aus olefinisch ungesättigten Monomeren und olefinisch ungesättigten Monomeren mit aktivem Wasserstoff. Sie werden beispielsweise in der EP-A 62 780, Seite 5 und deren Beispielen beschrieben. Sie finden vorzugsweise Anwendung für Dichtungs-, Füll-, Kleb- oder Unterbodenschutzmassen.

Selbstverständlich können Mischungen der obengenannten Verbindungen mit mindestens zwei gegenüber Isocyanaten reaktionsfähigen Wasserstoffatomen mit einem Molekulargewicht von 400 - 10 000, z.B. Mischungen von Polyethern und Polyestern, eingesetzt werden.

Die erfindungsgemäß erhältlichen langzeitlagerstabilen Einkomponenten-Reaktivsysteme enthalten gegebenenfalls auch niedermolekularen Kettenverlängerer oder Vernetzer. Bei diesen niedermolekularen Kettenverlängerern oder Vernetzern handelt es sich um zwei- oder mehrfunktionelle Verbindungen, welche an aliphatische und/oder cycloaliphatische Gruppen gebundene Hydroxylgruppen aufweisen. Bevorzugt sind dabei niedermolekulare Diole mit an aliphatische oder cycloaliphatische Gruppen gebundenen Hydroxylgruppen, des Molekulargewichtsbereichs 62 bis 399.

Diese Verbindungen weisen in der Regel 2 bis 8, vorzugsweise 2 bis 4, besonders bevorzugt jedoch 2, gegenüber Isocyanaten reaktionsfähige Wasserstoffatome wie Hydroxyl- und/oder Aminogruppen auf. Es können selbstverständlich auch Mischungen von verschiedenen Verbindungen verwendet werden. Als Beispiele für derartige Verbindungen seien genannt: Ethylenglykol, Trimethylenglykol, Butandiol-2,3 und/oder -1,4, Hexandiol-1,6, Neopentylglykol, 1,4-Bis-hydroxyethyl-cyclohexan, 1,4-Dihydroxycyclohexan, Terephthalsäure-bis($\beta$-hydroxyethyl)ester, 1,4,3,6-Dianhydrohexite, 1,4-Monoanhydrotetrite, sowie weniger bevorzugt Diole mit sekundären Hydroxylgruppen, z.B. Propylenglykol, Butandiol-2,3, oder Pentandiol-2,5. Als mehrwertige Verbindungen seien genannt: Trimethylolpropan, Trimethylolethan, Hexantriol-1,2,6, Glycerin, Pentaerythrit, Chinit, Mannit, Sorbit, Rizinusöl, sowie Di-, Tri- und Tetraethylen-, -propylen-, und -butylen-glykole, ferner Bis-2-hydroxyethyl)-hydrochinon, Bis-(2-hydroxyethyl)-resorcin, Formose oder Formit. Ferner sind geeignet tertiäraminhaltige Di- oder Polyole, z.B. N-Methyldiethanolamin, Triethanolamin oder N,N'-Bis-hydroxyethylpiperazin.

Es sind jedoch auch Diole mit zusätzlichen Gruppen einsetzbar, z.B. Adipinsäure-bis-(2-hydroxyethyl)-ester, Terephthalsäure-bis-(2-hydroxyethyl)-ester, Diolurethane, Diol-harnstoffe oder Polyole, welche Sulfonat- und/oder Phosphonatgruppen enthalten, z.B. 1,6-Hexamethylen-bis-(2-hydroxyethylurethan), 4,4'-Diphenylmethan-bis-(2-hydroxyethylharnstoff) oder das Addukt von Na-Bisulfit an Butendiol-1,4, bzw. dessen Alkoxylierungsprodukte. Weitere niedermolekulare Verbindungen werden ausführlich in der DE-OS 2 854 384 beschrieben.

Ferner können in üblicher Weise gegebenenfalls gegenüber Isocyanaten monofunktionelle Verbindungen in Anteilen von 0,01 bis 10 Gew.-% als sogenannte Kettenabbrecher mitverwendet werden. Derartige monofunktionelle Verbindungen sind z.B. Monoamine, wie Butyl- oder Dibutylamin, Stearylamin, Pyrrolidin, 4-Amino-2,2,6,6-tetramethylpiperidin, Anilin oder Tolylamin, Monoalkohole wie Butanol, 2-Ethylhexanol, Cyclohexanol, Ethylenglykolmonoethylester, Monooxime wie Butanonoxim oder andere monofunktionelle Verbindungen wie N,N-Dimethylhydrazin oder Essigsäurehydrazid bzw. Benzoesäurehydrazid.

Als gegebenenfalls einzusetzende Katalysatoren (III) kommen die üblichen Polyurethankatalysatoren, mit besonders gutem Effekt tertiäre Amine oder Metallkatalysatoren, in Betracht.

Vertreter derartiger Katalysatoren sowie Einzelheiten über die Wirkungsweise der Katalysatoren sind im Kunststoff-Handbuch, Band VII, herausgegeben von Vieweg und Höchtlen, Carl-Hanser-Verlag München 1966, z.B. auf den Seiten 96 bis 102, und in der DE-OS 3 230 757 beschrieben.

Die Katalysatoren werden in der Regel in einer Menge zwischen etwa 0,001 und 10 Gew.-%, bezogen auf die Reaktivmischung eingesetzt.

Als gegebenenfalls einzusetzende Hilfs- und Zusatzstoffe (IV) seien genannt: Farbstoffe oder Pigmente, Füllstoffe wie Silicagel, Gips, Talkum, Aktivkohle, Metallpulver, UV-Absorptionsmittel oder Stabilisatoren wie phenolische Antioxidantien, Lichtschutzmittel, Treibmittel, oberflächenaktive Zusatzstoffe wie Emulgatoren

11

oder Schaumstabilisatoren, gegebenenfalls Zellregler, Antiblockmittel, Silikone, Flammschutzmittel, oder fungistatisch und/oder bakteriostatisch wirkende Substanzen.

Beispiele von gegebenenfalls bei der Polyurethanherstellung mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VI, herausgegeben von Vieweg und Höchtlen, Carl-Hanser-Verlag, München 1966, z.B. auf den Seiten 103 bis 113 und in den DE-OSen 2 854 384 und 2 920 501 beschrieben.

III) PU-Reaktiv-Mischungen und ihre Verarbeitung

Je nach Viskosität bzw. Schmelzverhalten der Ausgangskomponenten erhält man bei Raumtemperatur gut gießbare, rakelfähige oder auch feste, leicht aufschmelzbare (Einkomponenten-)PU-Reaktivmischungen. Diese Reaktivmischungen stellen dabei eine heterogene Suspension der festen, stabilisierten Diamine in einer Mischung aus den Polyolkomponenten und den Polyisocyanaten, bzw. den NCO-Prepolymeren dar. Die Hitzevernetzung dieser Mischung erfolgt gegebenenfalls bei Zugabe geeigneter Katalysatoren (III) in beschleunigter Form.

Ein Merkmal dieser Einkomponenten-PU-Reaktivsysteme ist, daß sie nach Erreichen einer (von Menge und Art des Isocyanats (B) abhängigen) Temperatur innerhalb weniger Minuten vernetzen. Das bedeutet, daß einerseits unterhalb dieser Temperatur ("Aufdickungstemperatur") selbst bei einem langen Fließweg ein völliges Ausfüllen der heißen Werkzeugform möglich ist, andererseits aber die rasche Verfestigung der Gießansätze nach Temperaturerhöhung schnelle Entformungszyklen gestattet. Von Vorteil ist auch die selbst bei höheren Temperaturen (z.B. bis 60°C) sehr lange Lagerzeit der Reaktivsysteme. Besonders vorteilhaft ist, daß man auch feste aromatische Diamine, wie z.B. 4,4'-Diaminodiphenylmethan, 2,4- oder 2,6-Diaminotoluol, 1,5-Diaminonaphthalin oder 3,3',5,5'-Tetramethyl-4,4'-diamino-diphenylmethan erfindungsgemäß "stabilisieren" und als Kettenverlängerungsmittel retardierter Reaktivität verwenden kann. Werden dagegen diese Diamine in unstabilisierter Form in einer der bisher üblichen Verfahrenstechniken mit NCO-Prepolymeren umgesetzt, so resultieren z.T. sehr viel kürzere Gießzeiten, so daß ein einwandfreier Verlauf der Mischung im Werkzeugteil nicht möglich ist.

Die Verarbeitung der erfindungsgemäß erhältlichen Einkomponentensysteme richtet sich nach deren Beschaffenheit. Flüssige, bei Raumtemperatur gießbare Systeme lassen sich im Gießprozeß verarbeiten, gegebenenfalls werden sie vor der Verarbeitung kurz erwärmt, z.B. auf 50-70°C. Die Verarbeitung kann auch im Schleuderguß erfolgen; Hohlkörper können durch Einbringung der Reaktivmasse in beheizte Formen unter Verteilung an der Oberfläche durch entsprechende Rotationsbewegungen hergestellt werden.

Auch nach dem slush-molding-Process können beheizte Formen mit der Reaktivmasse gefüllt werden. Nach einer gewissen Ausheizzeit/Reaktion an der beheizten Formoberfläche wird überschüssige, noch nicht reagierte Reaktionsmasse aus den Formen wieder ausgegossen.

Bei Mitverwendung von Treibmitteln können zellige Polyurethane hergestellt werden, die gegebenenfalls eine integrale Dichtestruktur aufweisen.

Nicht mehr gießbare, aber noch verlaufende Systeme können z.B. mit einer Rakel auf gewünschte Unterlagen, z.B. textile Unterlagen wie z.B. Vliese, Gewirke und Gewebe, (Spalt)leder, Matritzen (z.B. Veloursleder-Silikon-Matrizen), oder Zwischenträger (z.B. Trennpapiere) unter Bildung von Beschichtungen oder Zurichtungen, aufgebracht und anschließend durch Hitzestoß verfestigt werden.

Plastische Systeme (Pasten) können unter Druck- und Formgebung in der Hitze verpreßt werden, wobei bei 120°C bereits 5 bis 15 Minuten zur Verfestigung ausreichend sind.

Auch durch Tauchverfahren können Oberflächenbeschichtungen, Abdruckformen oder Formkörper hergestellt werden, indem man die beheizten, zu beschichtenden Formen in die Reaktivmasse eintaucht.

Die Reaktivmasse kann auch durch Schlitze oder Düsen in heiße Medien (Heißluft oder heiße Flüssigkeiten) ausgepreßt und dadurch verfestigt werden.

Die Reaktivmasse kann in beheizten Extrudern teilweise oder weitgehend zum Polyurethan reagiert werden und in dieser Form durch Schlitze oder Düsen extrudiert und gegebenenfalls in heißen Medien vollständig ausreagiert werden, oder in heiße Formen eingebracht werden, woraus sie nach kurzer Zeit entformt werden kann. Auch nach dem Reaktionsspritzgußverfahren (reaction-injection-molding - RIM -) kann die Reaktivmasse verarbeitet werden.

Feste Systeme, insbesondere auf Basis höherschmelzender (45 bis 65°C) Polyole (C) werden entweder unter Druck und Formgebung (Spritzguß) oder etwa bei oder oberhalb der Schmelztemperatur des Polyols verarbeitet. Man kann so verfahren, daß man die vorher hergestellten Einkomponentensysteme in Form fester Granulate in eine über den Schmelzpunkt des Polyols aufgewärmte Form (im allgemeinen unterhalb 60°C) einbringt. Nach dem Aufschmelzen der Granulate wird die Form auf 100 bis 140°C erwärmt und der Inhalt verfestigt.

Die Verfestigungstemperatur der erfindungsgemäß erhältlichen Einkomponentensysteme ist von Menge und chemischer Konstitution der Polyisocyanate (B) abhängig. Mit zunehmender Temperatur nimmt die Verfestigungszeit bis zur Bildung der Polyurethane ab. Die Ausheizdauer kann je nach Temperatur von weniger als 1 Minute bis zu mehreren Stunden betragen. Manchmal ist es vorteilhaft, die Kunststoffe nach Entformen noch einige Zeit bei 100°C zu tempern, um eine vollständige Durchhärtung zu gewährleisten.

Eine Aushärtung der Einkomponenten-Reaktivsysteme kann jedoch auch durch Zugabe von vorzugsweise hochpolaren Lösungsmitteln wie Dimethylformamid, N-Methyl-pyrrolidon, oder mäßig polaren Lösungsmitteln wie Propylencarbonat, Dioxan oder Glykolmonomethyletheracetat erfolgen. Je nach Menge dieser Lösungsmittel kann der Stabilisierungseffekt in den Einkomponentensystemen zum Teil oder völlig aufgehoben werden. Die Gießzeit (Topfzeit) solcher Ansätze kann dabei durch die Menge des Lösungsmittels gesteuert werden. Bei geringen Mengen erhält man Systeme mit mehrtägiger Topfzeit bei Raumtemperatur, während bei höheren Dosierungen bereits nach 10 bis 15 Minuten schnelle oder gar schlagartige Verfestigung eintritt. Die jeweils erforderliche Menge an Lösungsmittel ist wieder von der Menge und Art des Isocyanats (B) abhängig und wird nach einfachen Vorversuchen für die jeweiligen Systeme festgelegt. Der technische Vorteil solcher Reaktionsmischungen liegt darin, daß sie auch ohne Zufuhr von Wärme verfestigen. Selbstverständlich kann man auch durch geeignete Dosierung der Lösungsmittel die thermische Verfestigungszeit der Einkomponentensysteme erniedrigen, wobei noch eine ausreichende Lagerstabilität gegeben sein kann.

Weiterhin kann eine Verfestigung der erfindungsgemäß erhältlichen Einkomponentensysteme auch durch Anwendung hoher Scherkräfte herbeigeführt werden, so z.B. in hochtourigen Rührwerken. Durch mechanische Beanspruchung während des Rührprozesses wird die auf der Polyaminteilchenoberfläche befindliche Polyharnstoffhaut zerstört.

Beispiel 1

Zu einer Suspension von 7,25 g (45,8 mMol) pulverisiertem 1,5-Diaminonaphthalin (NDA) (Teilchengröße 10 - 50 μm) in 20 g Dioctylphthalat wird das unten erwähnte Polyisocyanat X in der angegebenen Menge zugesetzt. Man läßt den Reaktionsansatz bei Raumtemperatur einige Stunden zur Bildung des stabilisierten Diamins mit retardierter Reaktivität nachrühren. Man fügt dann 100 g eines NCO-haltigen Voraddukts (NCO = 3,6 Gew.-%), das aus einem linearen Polypropylenglykolether (MG = 2000, OHZ = 56) und 2,4-Diisocyanatotoluol in bekannter Weise hergestellt wurde, hinzu. Es erfolgt nunmehr Polyaddition beider Komponenten (NH₂/NCO-Reaktion). Je nach Stärke der auf der Oberfläche der NDA-Teilchen gebildeten Polyharnstoffhülle beobachtet man einen zeitlich unterschiedlichen Viskositätsaufbau der Reaktionsansätze bei Raumtemperatur.

Es wird nun der Zeitpunkt bestimmt, bei dem die Viskosität der Ansätze einen Wert von 40 000 mPas erreicht hat.

```
Ansatz:        .   20,00 g Dioctylphthalat

                   7,25 g NDA

                   2,8  mMol Diisocyanat (oder entspr. Menge
                            an Triisocyanat) (6,1 Äqu.-%
                            Isocyanat auf 1 Äqu. Amin)
                   _____

                   100,00 g NCO-Prepolymer (NCO = 3,6 %)
```

| Nr. | Polyisocyanat X | Menge/g | Zeitpunkt bei Erreichung 40 000 mPas |
|---|---|---|---|
| a) | – | – | 1 h 30 min (Vergleich) |
| b) | 2,4-Diisocyanatotoluol (TDI) | 0,5 | 1 h 55 min ( " ) |
| c) | 4,4'-Diisocyanatodiphenylmethan | 0,7 | 1 h 40 min ( " ) |
| d) | Isophorondiisocyanat (IPDI) | 0,6 | 2 h 30 min |
| e) | biuretisiertes 1,6-Diisocyanato-hexan (Desmodur ® N) | 1,0 | 3 h 45 min |

(Desmodur ® -N - Produkt der BAYER AG, D-5090 Leverkusen).

EP 0 171 015 B1

Der desaktivierende Einfluß der Polyisocyanate auf die NH$_2$/NCO-Reaktion ist bei dieser Versuchsreihe, insbesondere bei Verwendung von IPDI und biuretisiertem 1,6-Diisocyanatohexan im Vergleich zum Null-Versuch (Nr. a) deutlich erkennbar.

Die Ansätze lassen sich jeweils durch 1-stündiges Erhitzen auf 135 bis 140 °C zu elastomeren Polyurethan(harnstoff)en aushärten.

Beispiel 2

Zu einer Suspension von 40 g 1,5-Diaminonaphthalin (NDA) in 50 g eines linearen Polypropylenglykolethers (MG = 2000, OHZ = 56) wird bei Raumtemperatur und unter starkem Rühren eine Lösung von 7,5 g trimerisiertem IPDI (NCO = 14,8 %) in 5 g Toluol zugesetzt (entspricht 5,2 Äqu.-% Isocyanat auf Äqu. Amin). Nach einer Rührzeit von 4 - 5 h wurden 14 g dieser Suspension des stabilisierten Diaminonaphthalins mit 100 g des in Beispiel 1 erwähnten NCO-Voraddukts aus einem linearen Polypropylenglykolether und 2,4-Diisocyanatotoluol (NCO = 3,6 %) innig verrührt. Es erfolgt bei Raumtemperatur allmähliche Viskositätserhöhung und man erhält nach 65 min eine Viskosität von 40 000 mPas.

Durch Ausheizen der Reaktivmischung auf 130 °C erhält man einen elastomeren Polyurethanharnstoff.

Beispiel 3 (Vergleichsversuch)

Werden 100 g des in Beispiel 1 und 2 angeführten NCO-Voraddukts mit 14 g einer Suspension von 40 g NDA in 50 g des linearen Polypropylenglykolethers, bei dem das 1,5-Diaminonaphthalin nicht durch den Zusatz von trimerem IPDI desaktiviert wurde, vermischt, so wird bereits nach 21 min eine Viskosität von 40 000 mPas erreicht.

Im Vergleich zu Beispiel 2 (desaktiviertes NDA) erfolgt hierbei die Polyaddition der Ausgangskomponenten mit einer deutlich höheren Geschwindigkeit (Faktor ∿3).

Beispiel 4

Einer Suspension von 50 g 2,4-Diaminotoluol (TDA) in 50 g eines linearen Polypropylenglykolethers (MG = 2000, OHZ = 56) wurden folgende Polyisocyanate X in der angegebenen Menge zugesetzt. Nach einer Rührzeit von mehreren Stunden bei leicht erhöhter Temperatur (bis 50 °C) wurden 10,5 g der nunmehr desaktivierten, auf Raumtemperatur abgekühlten TDA/Polyether-Suspension mit 100 g des in Beispiel 1 beschriebenen NCO-Voraddukts (NCO = 3,6 %) innig vermischt. Es erfolgt bei Raumtemperatur eine allmähliche Viskositätserhöhung. Als Maß für die Reaktivität des desaktivierten TDA's gegenüber den NCO-Gruppen wird der Zeitpunkt bis zum Erreichen von 10 000 bzw. 40 000 mPas/RT bestimmt.

```
Ansatz:              50 g TDA
                     50 g Polyether (MG = 2000)
                     ─────────────────────────
                      Y  g Polyisocyanat X
```

EP 0 171 015 B1

| Versuch | Polyisocyanat X | Menge/g (Y) | Äqu.-% NCO pro Äqu. Amin | Zeit (min) bis zum Errei- chen einer Viskosität von | |
|---|---|---|---|---|---|
| | | | | 10 000 mPas | 40 000 mPas |
| a | - | - | O | 4 | 12 (Vergleich) |
| b | biuretisiertes 1,6-Diisocyanatohexan (N) | 3,4 | 2,15 | 17 | 28 |
| c | " | 6,8 | 4,3 | 32 | 51 |
| d | IPDI | 3,83 | 4,3 | 57 | 85 |
| e | " | 7,66 | 8,6 | 53 | 82 |
| f | Addukt von 3 Mol Tolu-ylen-2,4-diisocyanat an Trimethylolpropan | 12,5 | 4,3 | 10 | 28 (Vergleich) |

Auch in diesem Beispiel ist der desaktivierende Einfluß der erfindungsgemäß gebildeten Polyharnstoff-hülle auf die NCO/NH$_2$-Reaktion, insbesondere bei Verwendung von IPDI und biuretisiertem 1,6-Diisocyanatohexan, deutlich erkennbar.

Die genannten Reaktionsmischungen weisen gegenüber dem Vergleichsversuch (Nr. a) eine zum Teil beträchtlich längere Gießzeit (Topfzeit) auf.


Beispiel 5

Zu einer Suspension von 40 g 1,5-Diamino-naphthalin (NDA) in 50 g eines linearen Polypropylenglykolethers (MG = 2000, OHZ = 56) wurden die in untenstehender Tabelle angegebenen Mengen an biuretisiertem 1,6-Diisocyanatohexan (NCO = 22,5 %) zugesetzt. Nach einer Rührzeit von 4 - 5 h bei 30 - 50°C wurden 14 g dieser Suspension (6,2 g desaktiviertes NDA und 7,8 g Polyether als Suspendiermedium) mit 100 g des NCO-Voraddukts auf Polyetherbasis (s. Beispiel 1; NCO = 3,6 %) vermischt.

Als Maß für die Desaktivierung des in heterogener Phase vorliegenden NDA wird nunmehr die Vernetzungstemperatur der Reaktionsmischung bestimmt. Dazu wird auf einer KOFLER-Heizbank über einen Temperaturbereich von 40 bis 250°C ein dünner Film des Ansatzes aufgetragen. Nach 15 min wird die minimale Temperatur bestimmt, bei der dieser Film elastisch zu vernetzen beginnt. Liegt hierbei die Vernetzungstemperatur > 50 - 60°C, so ist der Reaktionsansatz erfahrungsgemäß bei Raumtemperatur über Monate hinaus lagerstabil und behält nach 1 - 2 Tagen (nach der Reaktion des in geringen Mengen vorhandenen Polyethers in der NDA/Suspension mit dem NCO-Voraddukt) seine Viskosität konstant.


**Ansatz:**          **40 g NDA**

**50 g Polyether (linear, MG = 2000)**

────────────────────────────────────

**Y  g biuretisiertes 1,6-Diisocyana-tohexan**

| | Menge an biuretisiertem 1,6-Diisocyanatohexan (g) (Y) | Äqu.-% Isocyanat pro Äqu. Amin | Vernetzungstemperatur °C |
|---|---|---|---|
| a) | — | — | 50 (Vergleich) |
| b) | 0,5 | 0,53 | 65 |
| c) | 1,7 | 1,8 | 135 |
| d) | 2,5 | 2,65 | 160 |
| e) | 3,0 | 3,2 | 165 |
| f) | 3,5 | 3,7 | 165 – 170 |

Wird der unter c) angegebene, bei Raumtemperatur unter Feuchtigkeitsausschluß lagerstabile, flüssige Reaktionsansatz nach kurzzeitigem Entgasen im Vakuum in eine mit Trennmittel versehene Form gegossen und 1 bis 2 h bei 140°C ausgeheizt, so erhält man ein hochelastisches PUR-Elastomer mit folgenden mechanischen Eigenschaften:

| | | |
|---|---|---|
| Härte (Shore A) | 83 | (DIN 53 505) |
| Zugfestigkeit (MPa) | 8,9 | (DIN 53 504) |
| Bruchdehnung (%) | 450 | (DIN 53 504) |
| Weiterreißwiderstand (kN/m) | 20,5 | (DIN 53 515) |
| Elastizität (%) | 60 | (DIN 53 512) |

Beispiel 6

Werden 14 g der in Beispiel 5 beschriebenen desaktivierten NDA/Polyether-Suspension mit 100 g eines NCO-Voraddukts aus einem auf Adipinsäure und Ethylenglykol basierenden linearen Polyester mit einem Molgewicht 2000 (OHZ = 56) und 2,4-Diisocyanatotoluol (NCO-Gehalt des Voraddukts = 3,6 Gew.-%) bei 50 - 60°C verrührt, so zeigen die erhaltenen Reaktionsansätze folgende Vernetzungstemperaturen (KOFLER-Bank-Methode, vgl. Beispiel 5):

| | biuretisiertes 1,6-Diiso-cyanatohexan (g) | Vernetzungstemperatur (°C) |
|---|---|---|
| a) | - | 40  (Vergleich) |
| b) | 0,5 | 50 |
| c) | 1,7 | 120 |
| d) | 2,5 | 150 |
| e) | 3,0 | 160 |
| f) | 3,5 | 160 - 170 |

Auch hier verhalten sich die Reaktionsansätze c) bis f) bei Raumtemperatur unter Feuchtigkeitsausschluß lagerstabil. Wird der unter c) beschriebene Ansatz (Vernetzungstemperatur: 120°C) unter den in Beispiel 5 erwähnten Verarbeitungsbedingungen bei 140°C hitzevernetzt, so erhält man ein PUR-Elastomer mit folgendem mechanischen Werteniveau:

| | |
|---|---|
| Härte (Shore A) | 81 |
| Zugfestigkeit (MPa) | 27,7 |
| Bruchdehnung (%) | 550 |
| Weiterreißwiderstand (kN/m) | 42 |
| Elastizität (%) | 52 |

Beispiel 7

Zu einer Suspension von 40 g feinpulverisiertem 4-Aminobenzoesäure-(4-aminoanilid) (4,4'-Diamino-benzanilid) in 50 g des linearen Polypropylenglykolethers (OHZ = 56) werden 1,5 g biuretisiertes 1,6-Diisocyanatohexan zugesetzt. Das Reaktionsgemisch wird noch 3 - 5 h bei Raumtemperatur nachgerührt.

19

a) 22 g dieser Suspension wurden mit 100 g des bereits erwähnten NCO-Voraddukts auf Polyetherbasis (NCO = 3,6 %) (Beispiel 5) vermischt. Der Reaktionsansatz verhält sich bei Raumtemperatur lagerstabil und zeigt auf der KOFLER-Bank eine Vernetzungstemperatur von 120 - 125° C. Wird die flüssige Mischung nach kurzer Entgasungsphase im Vakuum auf eine Temperatur von 130 - 140° C gebracht, so erhält man nach 1 bis 2 h ein blasenfreies PUR-Elastomer mit folgenden mechanischen Eigenschaften:

```
Härte (Shore A)                 80
Zugfestigkeit (MPa)             10,5
Bruchdehnung (%)                350
Weiterreißwiderstand (kN/m)     28,5
Elastizität (%)                 55
```

b) Wird das NCO-Voraddukt auf Polyetherbasis durch ein entsprechendes NCO-Prepolymer auf Polyesterbasis (Polyester aus Adipinsäure und Ethylenglykol, MG 2000, OHZ = 56) ersetzt, so erhält man mit 22 g der genannten 4,4'-Diamino-benzanilid/Polyether-Suspension pro 100 g NCO-Voraddukt (NCO = 3,6 %) ebenfalls ein bei Raumtemperatur lagerstabiles PUR-System, das vor der Verarbeitung durch Aufschmelzen (50 - 60° C) in einen gießbaren Zustand gebracht werden kann (Vernetzungstemperatur: 115 - 120° C). Das unter den bereits erwähnten Verarbeitungsbedingungen (1 bis 2 h bei 130 - 140° C) hergestellte PUR-Elastomer weist folgende mechanische Eigenschaften auf:

```
Härte (Shore A)                 80
Zugfestigkeit (MPa)             23
Bruchdehnung (%)                370
Weiterreißwiderstand (kN/m)     42
Elastizität (%)                 48
```

Beispiel 8 (Vergleichsversuch)

Bei Verwendung der in Beispiel 7 beschriebenen Suspension aus 40 g 4,4'-Diaminobenzanilid in 50 g eines linearen Polypropylenglykolethers, die aber nicht durch Zusatz von 1,5 g biuretisiertem 1,6-Diisocyanatohexan behandelt wurde, ergeben sich mit den unter 7a und 7b beschriebenen NCO-Voraddukten folgende Gießzeiten (Topfzeiten):

a) 100 g NCO-Voraddukt/Basis: Polyether 22 g Suspension (nicht desaktiviert)

Gießzeit bei Raumtemperatur = 15 - 25 min, d.h. nach dieser Zeit ist der Reaktionsansatz nach den üblichen Gießverfahren nicht mehr zu verarbeiten.

b) 100 g NCO-Voraddukt/Basis: Polyester 22 g Suspension (nicht desaktiviert)

Gießzeit bei 70 - 80° C: 5 bis 10 min.

Beispiel 9

Einer Suspension von 40 g Ethylenglykol-bis-(p-aminobenzoesäureester) in 50 g eines linearen Polypropylenglykolethers (MG = 4000, OHZ = 28) wurden 4 g Isophorondiisocyanat (IPDI) zugesetzt. Nach eintägigem Stehen des Ansatzes bei Raumtemperatur wurden 26 g dieser Suspension mit 100 g eines NCO-Voraddukts auf Basis eines Polypropylenglykolethers (MG = 2000, OHZ = 56) und 2,4-Diisocyanatotoluol (NCO = 3,6 Gew.-%) vermischt. Der Reaktionsansatz verhält sich nunmehr bei Raumtemperatur (Feuchtigkeitsausschluß) lagerstabil, verfestigt aber nach wenigen Stunden bei einer Temperatur von 120 - 130° C. Nach einer Temperzeit von 24 h bei 110° C wurden folgende mechanische Werte an einer

Probeplatte gemessen:

| Härte (Shore A) | 65 |
|---|---|
| Zugfestigkeit (MPa) | 6,5 |
| Bruchdehnung (%) | 650 |
| Weiterreißwiderstand (kN/m) | 12,5 |
| Elastizität (%) | 35 |

Ohne erfindungsgemäße Umhüllung mittels IPDI beträgt die Gießzeit obiger Kombination ca. 120 min bei Raumtemperatur.

Beispiel 10

Einer Suspension von 40 g 4,4'-Diamino-3,3'-dicarboxymethyl-diphenylmethan in 70 g eines linearen, hochmolekularen Polypropylenglykolethers (MG = 4000, OHZ = 28) wurden 4 g IPDI zugesetzt. Nach mehrstündigem Rühren bei 30 - 50° C wurden 35 g dieser Suspension mit 100 g des NCO-Voraddukts auf Polyesterbasis (NCO = 3,6 %) vermischt. Die Vernetzungstemperatur beträgt bei diesem Ansatz 110 - 120° C. Nach 1 bis 2 Tagen bleibt die Viskosität des Reaktionsansatzes konstant. Eine Verfestigung erfolgt erst durch Hitzestoß, wobei bei 120 - 130° C ein elastisches PUR-Material mit einer Härte von 72 Shore A entsteht.

Ohne erfindungsgemäße Ausbildung einer Polyharnstoffhülle mittels 4 g IPDI zeigt die Suspension (35 g) in Kombination mit dem NCO-Voraddukt (100 g) eine Gießzeit von 2 - 3 h bei Raumtemperatur. Der Ansatz ist bei Raumtemperatur also nicht lagerstabil.

**Ansprüche**

1. Verfahren zur Herstellung von in einem Polyol dispergierten, mit einer Polyharnstoffhülle umgebenen festen Polyaminen, dadurch gekennzeichnet, daß man
(A) Polyamine mit mindestens 2 primären und/oder sekundären Aminogruppen, einem Schmelzpunkt > 50° C und einer Teilchengröße von 0,5 - 200 μm mit
(B) 0,1 25 Äquivalent %, bezogen auf primäre und sekundäre Aminogruppen in (A), an wasserunlöslichen, (cyclo) aliphatischen Polyisocyanaten in
(C) einer flüssigen Polyhydroxylverbindung mit einem Molekulargewicht von 400 - 10 000, sowie gegebenenfalls
(D) Weichmachern, unpolaren oder wenig polaren Lösungsmitteln, unterhalb der Schmelztemperatur von (A) umsetzt.

2. Verfahren nach Anspruch 1, dadurch gekennzeichnet, daß (A) ein aromatisches Diamin ist.

3. Verfahren nach einem der Ansprüche 1 oder 2, dadurch gekennzeichnet, daß die Polyisocyanate (B) eine mittlere Funktionalität von > 2,1 und Molekulargewichte bis 850 besitzen.

4. Verfahren nach einem der Ansprüche 1 bis 3, dadurch gekennzeichnet, daß man als Polyisocyanate (B) dimerisierte, biuretisierte, trimerisierte, allophanatisierte, carbodiimidisierte oder mit Polyolen modifizierte Polyisocyanate einsetzt.

5. Mit einer Polyharnstoffhülle umgebene und in Polyhydroxylverbindungen mit Molekulargewichten von 400 bis 10 000 suspendierte feste, feinteilige Polyamine, erhältlich nach dem Verfahren der Ansprüche 1 bis 4.

6. Verwendung von Polyaminen nach Anspruch 5 zur Herstellung von Polyurethanen.

Claims

1. A process for the production of solid polyamines covered with a polyurea shell and dispersed in a polyol, characterized in that

(A) polyamines containing at least 2 primary and/or secondary amino groups and having a melting point of > 50° C and a particle size of 0.5 to 200 μm

are reacted with

(B) 0.1 to 25 equivalent-%, based on primary and secondary amino groups in (A), of water-insoluble, cycloaliphatic polisocyanates in

(C) a liquid polyhydroxyl compound having a molecular weight of 400 to 10,000

and, optionally,

(D) plasticizers, apolar or slightly polar solvents below the melting temperature of (A).

2. A process as claimed in claim 1, characterized in that (A) is an aromatic diamine.

3. A process as claimed in claim 1 or 2, characterized in that the polyisocyanates (B) have an average functionality of > 2.1 and molecular weights of up to 850.

4. A process as claimed in any of claims 1 to 3, characterized in that dimerized, biuretized, trimerized, allophanate-modified, carnodiimide-modified or polyol-modified polyisocyanates are used as the polyisocyanates (B).

5. Solid, finely divided polyamines covered with a polyurea shell and suspended in polyhydroxyl compounds having molecular weights in the range from 400 to 10,000 obtainable by the process claimed in claims 1 to 4.

6. The use of the polyamines claimed in claim 5 for the production of polyurethanes.


Revendications

1. Procédé de préparation de polyamines solides, enrobées d'une enveloppe de polyurée, en dispersion dans un polyol, caractérisé en ce que :

on fait réagir

(A) des polyamines portant au moins deux groupes amino primaires et/ou secondaires, ayant un point de fusion supérieur à 50° Ç et une dimension de particule de 0,5 à 200 μm, avec

(B) 0,1 à 25 équivalents %, par rapport aux groupes amino primaires et secondaires contenus dans (A), de polyisocyanates (cyclo)aliphatiques insolubles dans l'eau, dans

(C) un composé polyhydroxylé liquide ayant un poids moléculaire de 400 à 10 000, et le cas échéant

(D) des plastifiants, des solvants non polaires ou peu polaires, à une température inférieure à la température de fusion de (A).

2. Procédé selon la revendication 1, caractérisé en ce que le composant (A) est une diamine aromatique.

3. Procédé selon l'une des revendications 1 ou 2, caractérisé en ce que les polyisocyanates (B) ont une fonctionnalité moyenne supérieure à 2,1 et un poids moléculaire allant jusqu'à 850.

4. Procédé selon l'une des revendications 1 à 3, caractérisé en ce que l'on met en oeuvre en tant que polyisocyanates (B) des polyisocyanates dimérisés, biurétisés, trimérisés, allophanatisés, carbodiimidisés ou modifiés par des polyols.

5. Polyamines solides en fines particules enrobées dans une enveloppe de polyurée et en suspension dans des composés polyhydroxylés de poids moléculaire 400 à 10 000, obtenues par le procédé des revendications 1 à 4.

6. Utilisation des polyamines de la revendication 5 pour la préparation de polyuréthannes.